# EUROPÄISCHE PATENTSCHRIFT

(11) **EP 1 312 153 B1**
(45) Veröffentlichungstag und Bekanntmachung des Hinweises auf die Patenterteilung: **21.01.2009**
(21) Anmeldenummer: 01969583.2
(22) Anmeldetag: 10.08.2001
(51) Int. Cl.: H02K 16/04, H02P 7/00, H02M 5/458, H02J 3/38, F03D 9/00

(54) **WINDENERGIEANLAGE**
WIND POWER PLANT
INSTALLATION D'ENERGIE EOLIENNE

(30) Priorität: 14.08.2000 DE 10040273
(43) Veröffentlichungstag der Anmeldung: 21.05.2003
(60) Teilanmeldung: 07122327.5
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/009239
(87) Internationale Veröffentlichungsnummer: WO 2002/015367

(56) Entgegenhaltungen:
- EP-A- 0 884 833
- CA-A- 2 215 971
- DE-A- 4 232 356
- DE-A- 19 620 906
- GB-A- 2 331 858
- PL-A- 163 364
- PL-A- 167 487
- US-A- 4 550 267
- US-A- 5 783 894
- US-A- 5 844 327
- US-A- 5 939 800
- US-B1- 6 856 045

## Beschreibung

Die vorliegende Erfindung betrifft eine Windenergieanlage mit bevorzugt wenigstens zwei Gleichrichtern und zwei Wechselrichtern.

Eine solche Windenergieanlage ist aus der Patentschrift DE 196 20 906.4 bekannt. Bei dieser Windenergieanlage ist es jedoch nachteilig, dass bei einem Ausfall des Generators und/oder des Transformators die Windenergieanlage keine elektrische Energie mehr erzeugen bzw. abgeben kann. Bei einem Ausfall eines Gleichrichters und/oder eines Wechselrichters fällt immerhin noch etwa die Hälfte des möglichen Energieertrages aus, so dass eine schnelle Instandsetzung erforderlich ist, um wenigstens den wirtschaftlichen Schaden für den Betreiber der Anlage durch den verlorenen Energieertrag zu begrenzen.

Bei dieser bekannten Windenergieanlage sind zwei phasenversetzte Statorwicklungen vorgesehen, die gemeinsam auf dem selben Stator angeordnet sind. Die Wicklungen sind jedoch elektrisch voneinander isoliert und weisen untereinander einen Phasenwinkel von 30° auf. Bei Ausfall einer Statorwicklung ist daher noch die Hälfte der möglichen Leistung verfügbar.

Um die Störung zu beseitigen und die Windenergieanlage instandzusetzen fährt Servicepersonal zu der gestörten Windenergieanlage und beseitigt die Störung, entweder durch eine Instandsetzung der gestörten bzw. beschädigten Komponenten, oder, soweit eine Instandsetzung nicht möglich ist, durch Austausch der defekten Komponenten gegen ein Ersatzteil.

Eine schnelle Instandsetzung setzt allerdings unter anderem voraus, dass die Windenergieanlage schnell zu erreichen ist und bei Bedarf Ersatzteile schnell herangeführt werden können.

Soweit diese schnelle Erreichbarkeit bei Windenergieanlagen an Land noch angenommen werden kann, ist die Situation bei Off-Shore-Anlagen, also Windenergieanlagen, die vor der Küste und damit im Meer aufgestellt sind, bereits deutlich verändert. Einerseits muss ein geeignetes Transportmittel verfügbar sein, mit dem gegebenenfalls auch großvolumige und/oder schwere Ersatzteile transportiert und gehandhabt werden können, und andererseits müssen Wetter und Seegang ein sicheres Erreichen der Anlage auch mit den geladenen Ersatzteilen zulassen. Aber selbst wenn die Anlage erreichbar ist, ist damit keineswegs sicher, das Seegang und Wetter eine umgehende Instandsetzung gestatten.

Daraus ergibt sich, dass bei hohem Seegang bzw. schlechtem Wetter wie z. B. einem Sturm Off-Shore-Anlagen durchaus für längere Zeit nicht erreichbar bzw. instandsetzbar sind und somit für längere Zeit keine Energie erzeugen bzw. abgeben können.

Ein weiterer Nachteil bei der vorbekannten Windenergieanlage wie auch aller anderen ist, dass auch bei dem dieser Windenergieanlage zu Grunde liegenden Konzept die Abmessungen und die Eigengewichte der einzelnen Komponenten mit steigender Generatorleistung größer werden.

Aus DE 42 32 356 A1 ist ein Windenergieanlagensystem bekannt, bei welchem eine einzige Windenergieanlage zwei galvanisch getrennte Statorkreise, bestehend aus Gleichrichter und Wechselrichter aufweist.

Aus US-A 4,550,267 ist eine elektrische Maschine mit einem Stator bekannt, welche eine Vielzahl von Bindungen aufweist, die voneinander unabhängig sind.

Um den Schaden durch den Ausfall von Komponenten einer Windenergieanlage zu begrenzen und die Verwendung von Standardkomponenten zu gestatten, wird erfindungsgemäß eine Windenergieanlage nach Anspruch 1 vorgeschlagen. Vorteilhafte Weiterbildungen sind in den weiteren Ansprüchen beschrieben.

Bei der efindungsgemäßen Windenergieanlage sind demnach wenigstens zwei Statoren, zwei Gleichrichter, zwei Wechselrichter und zwei Transformatoren vorgesehen. Diese bilden ausgehend von dem Stator jeweils ein eigenes und vollständiges System zum Erzeugen elektrischer Energie, zum Umrichten in z. B. eine sinusförmige Wechselspannung und Einspeisen in ein Wechselspannungsnetz.

In einer bevorzugten Ausführungsform der Erfindung sind vier kreisringförmig angeordnete und kreisringsegmentförmig ausgebildete Statoren vorgesehen, die jeder wenigstens eine eigene Wicklung aufweisen. Dadurch bleiben die Abmessungen und das Eigengewicht jedes Stators in einem Bereich, In dem der Transport und die Handhabung des Stators mit den üblichen und verfügbaren Hilfsmitteln zu bewerkstelligen sind.

In einer bevorzugten Weiterbildung der erfindungsgemäßen Windenergieanlage weist jeder Stator zwei Drehstromwicklungen auf, die elektrisch voneinander getrennt und mit einem Phasenwinkel von 30° gegeneinander versetzt sind. Durch diese Maßnahme kann ein Teil des Erregerstromes für den Läufer in der Statorwicklung erzeugt werden.

In einer insbesondere bevorzugten Weiterbildung der Erfindung sind jedem Stator ein Gleichrichter, ein Wechselrichter und ein Transformator zugeordnet. Dadurch entstehen vier separate Energieerzeugungssysteme, abgesehen von dem gemeinsamen Läufer. Demnach erzeugt jedes System ein Viertel der möglichen Gesamtleistung. Daraus folgt, dass bei einem Ausfall einer Komponente auch nur ein System ausfällt, und damit gerade ein Viertel der momentanen Gesamtleistung. Demnach stehen also drei Viertel der Leistung weiterhin zur Verfügung.

Legt man eine Gesamtleistung von 6 MW für eine Windenergieanlage zu Grunde wird demnach jedes System mit einer Leistung von 1,5 MW beaufschlagt. Diese Leistung gestattet die Verwendung von bereits heute verfügbaren und in großen Stückzahlen hergestellten Standardkomponenten als Gleichrichter, Wechselrichter und Transformator. Dadurch wird die Ausfallwahrscheinlichkeit durch den Einsatz technisch ausgereifter und in großen Stückzahlen hergestellter Komponenten deutlich verringert und trägt so wiederum zu einem dauerhaft hohen Ertrag einer erfindungsgemäßen Windenergieanlage bei.

Gemäß einer bevorzugten Ausführungsform der Erfindung sind jeder Statorwicklung ein Gleichrichter, ein Wechselrichter und ein Transformator zugeordnet. Ein Energieerzeugungssystem wird demnach aus einer Statorwicklung, einem Gleichrichter, einem Wechselrichter und einem Transformator gebildet. Durch diese Auslegung wird jedes der Systeme lediglich mit einem Achtel der momentan verfügbaren Leistung beaufschlagt. Daher steht bei Ausfall einer Komponente und damit eines Systems auch lediglich ein Achtel der verfügbaren Energie nicht mehr zur Verfügung, sieben Achtel sind jedoch weiterhin verfügbar.

Darüber hinaus erlaubt dieses Konzept wiederum eine Fertigung einer noch höheren Stückzahl der Standardkomponenten und damit eine Kostensenkung. Außerdem sind für diese Komponenten Transport- und Handhabungs-Mittel, -Verfahren und Wege verfügbar und vielfach erprobt.

In einer besonders bevorzugten Ausführungsform der Erfindung sind die Gleichrichter, die Wechselrichter und die Transformatoren überdimensioniert, bevorzugt um etwa 20%, ausgelegt und zwischen jeweils zwei Gleichrichtern, zwischen jeweils zwei Wechselrichtern und zwischen jeweils zwei Transformatoren sind Schalteinrichtungen vorgesehen, die bei Ausfall einer Komponente eine Umgehung derselben erlauben.

Durch die Überdimensionierung können die verbliebenen Komponenten wenigstens vorübergehend die Funktion der ausgefallenen Komponente übernehmen, ohne das dadurch eine Überlastung auftritt. Fällt also beispielsweise ein Gleichrichter aus, können die Schalteinrichtungen zwischen dem ausgefallenen Gleichrichter und einem oder mehreren benachbarten, funktionsfähigen Gleichrichtern betätigt werden. Dadurch werden die funktionsfähigen Gleichrichter mit einer entsprechend höheren Leistung beaufschlagt und richten die Wechselspannung aus dem System mit dem ausgefallenen Gleichrichter ebenfalls gleich.

Insbesondere bevorzugt erfolgt die Steuerung der Schalteinrichtungen unter Berücksichtigung der zu schaltenden Leistung, so dass bei geringer Leistung nur eine Schalteinrichtung schaltet. Ist die zu schaltende Leistung höher, werden mehrere Schalteinrichtungen betätigt, um so die Belastung auf mehrere Komponenten zu verteilen und eine Überlastung zu vermeiden.

In einer besonders bevorzugten Weiterbildung der Erfindung sind Schalteinrichtungen in der Zuleitung und/oder Ableitung jeder Komponente mit Ausnahme der Statoren vorgesehen. Durch die Betätigung der entsprechenden Schalteinrichtungen kann eine Rückwirkung der zu umgehenden Komponente sicher ausgeschlossen werden, wenn diese Komponente durch die Schalteinrichtungen vollständig freigeschaltet wird.

In einer alternativen Ausführungsform der Erfindung sind die Zuleitungen und Ableitungen der einzelnen Komponenten parallel geschaltet. Dadurch werden Schalteinrichtungen eingespart, bei Ausfall einer Komponente werden stets automatisch alle übrigen Komponenten beaufschlagt und die Steuerung wird vereinfacht, da lediglich die ausgefallene Komponente durch Schalteinrichtungen in den Zuleitungen und/oder Ableitungen freigeschaltet werden muss.

Die Redundanz der einzelnen Komponenten wird "äußere Redundanz" genannt und bezeichnet die Möglichkeit, bei Ausfall einer Komponente deren Funktion durch eine redundant vorhandene, andere Komponente übernehmen zu lassen. Bei Ausfall eines Gleichrichters übernehmen also andere Gleichrichter die Funktion, bei Ausfall eines Wechselrichters übernehmen andere Wechselrichter die Funktion und bei Ausfall eines Transformators übernehmen andere Transformatoren die Funktion.

Dem gegenüber steht die innere Redundanz. Diese bezeichnet eine Ausbildung einer Komponente mit mehreren Modulen, die untereinander redundant vorhanden sind und nach außen eine Komponente wie z. B. einen Wechselrichter bilden. Daher kann bei Ausfall eines von mehreren Modulen eines Wechselrichters dieser Wechselrichter durchaus noch funktionsfähig bleiben, da die verbleibenden Module des Wechselrichters die Funktion weiterhin verwirklichen können.

Demnach weist auch ein Stator mit zwei Wicklungen eine innere Redundanz auf, da bei Ausfall einer Wicklung noch die zweite Wicklung zur Energieerzeugung zur Verfügung steht, so dass der Stator immer noch die Hälfte der möglichen Leistung abgeben kann.

Somit kann die erfindungsgemäße Windenergieanlage auch bei Ausfall einzelner Komponenten oder Module, mit Ausnahme eines Stators oder einer Statorwicklung, die gesamte momentan verfügbare Leistung abgeben.

Weitere vorteilhafte Weiterbildungen der Erfindung sind in den Unteransprüchen beschrieben.

Im Folgenden wird eine Ausführungsform der Erfindung anhand eines Beispiels näher beschrieben. Dabei zeigen:
- Fig. 1: eine vereinfachte Darstellung eines erfindungsgemäßen Systems;
- Fig. 2: eine um Schalteinrichtungen ergänzte Darstellung des in Fig. 1 gezeigten Systems;
- Fig. 3: ein Beispiel zweier um 30° versetzter Statorwicklungen mit nachgeschaltetem Gleichrichter;
- Fig. 4: ein Beispiel eines erfindungsgemäßen Wechselrichters;
- Fig. 5: ein Beispiel redundant vorgesehener Transformatoren mit Schalteinrichtungen;
- Fig. 6: eine zweite Ausführungsform der vorliegenden Erfindung;
- Fig. 7: ein Beispiel redundant vorgesehener Transformatoren in der zweiten Ausführungsform der vorliegenden Erfindung; und
- Fig. 8: ein bekanntes System.

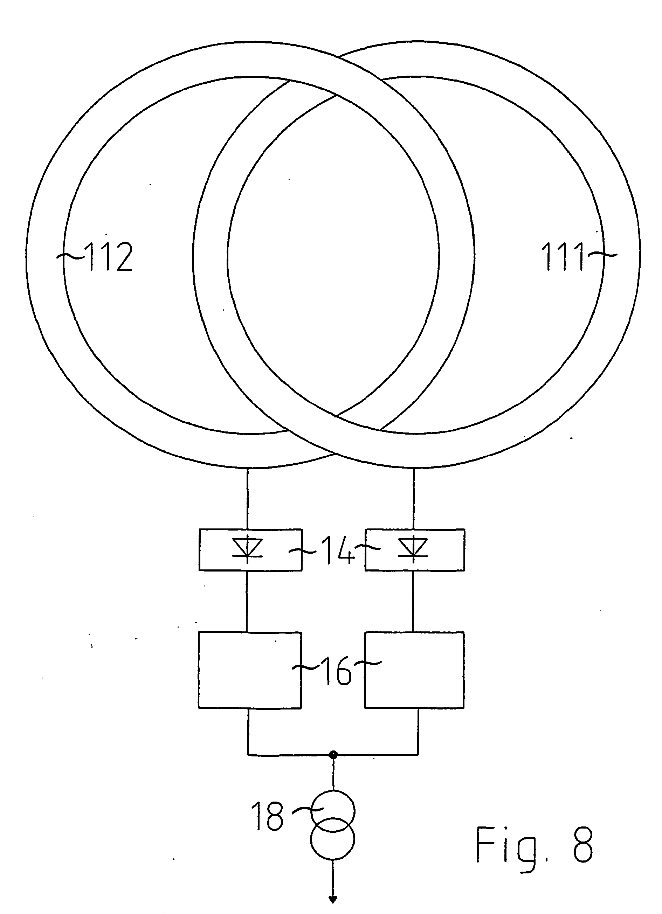

In Fig. 8 ist eine bekanntes elektrisches System einer Windenergieanlage dargestellt. Dieses elektrische System umfasst einen Generator, der in diesem Beispiel als Ringgenerator ausgebildet ist. Dieser Ringgenerator weist einen (nicht dargestellten) Läufer und zwei elektrisch voneinander isolierte und um 30° zueinander phasenversetzte Statorwicklungen 111, 112 auf.

Die Statorwicklungen 111, 112 sind jeweils mit dem Eingang eines eigenen Gleichrichters 14 verbunden. Der Ausgang jedes Gleichrichters 14 ist jeweils mit einem Eingang eines Wechselrichters 16 verbunden. Die Ausgänge der Wechselrichter 16 sind parallel an einen Transformator 18 angeschlossen.

Bereits der Ausfall des Transformators 18 führt zwangsläufig zu einem wirtschaftlichen Totalausfall der Windenergieanlage, da keine Energie mehr abgegeben werden kann. Dadurch entsteht dem Betreiber je nach Dauer des Ausfalls ein beträchtlicher Schaden.

Auch der Ausfall einer Statorwicklung 111, 112, eines Gleichrichters 14 und/oder eines Wechselrichters 16 führt immerhin noch zu einer Einbuße der Hälfte des möglichen Energieertrages und damit ebenfalls zu einem beträchtlichen wirtschaftlichen Schaden.

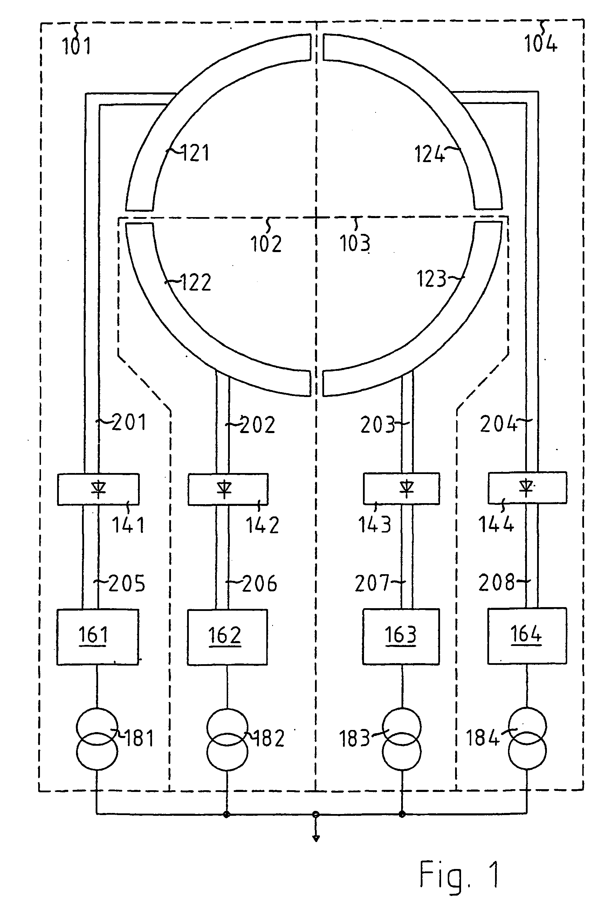

In Fig. 1 ist ein vereinfachtes Beispiel einer erfindungsgemäßen Windenergieanlage gezeigt. Bei dieser Windenergieanlage sind die meisten Komponenten redundant vorhanden. Diese Redundanz betrifft Teile des Generators, nämlich Statoren 121, 122, 123, 124, Gleichrichter 141, 142, 143, 144, Wechselrichter 161, 162, 163, 164 sowie Transformatoren 181, 182, 183, 184.

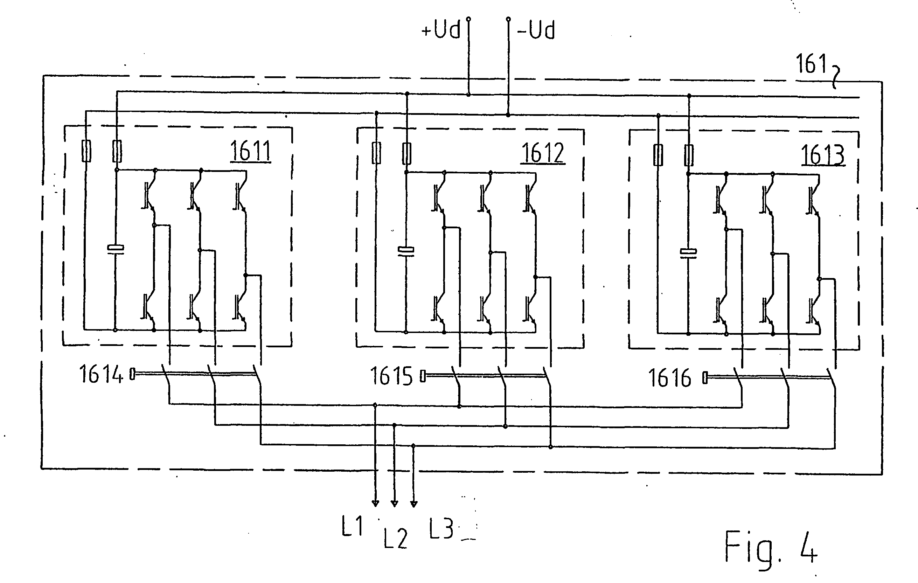

Diese Redundanz, die sich aus einer parallelen Anordnung der redundanten Komponenten ergibt, ist eine äußere Redundanz. Daneben ist bei einigen Komponenten zusätzlich eine innere Redundanz vorgesehen, die sich aus dem inneren Aufbau der Komponente aus mehreren gleichartigen, parallel geschalteten Modulen ergibt. Diese innere Redundanz findet sich z. B. bei den anhand von Figur 4 näher erläuterten Wechselrichtern.

Für die nachfolgende Erläuterung wird analog zu der obigen Betrachtungsweise jedes kreisringsegmentförmige Element 121, 122, 123, 124, welches wenigstens eine Wicklung aufweist, in der durch den drehenden Läufer (nicht dargestellt) eine Spannung induziert wird, als Stator bezeichnet, auch wenn vier kreisringsegmentförmige Elemente 121, 122, 123, 124 vorhanden und so angeordnet sind, dass sie zusammen etwa die Form eines einteiligen Stators eines Ringgenerators bilden, wie in der vorliegenden Ausführungsform.

Die kreisringförmig angeordneten, kreisringsegmentförmigen Statoren 121, 122, 123, 124 bilden zusammen etwa einen Kreisring, in dem zentrisch der (nicht dargestellte) Läufer des Generators durch die (ebenfalls nicht dargestellte) Rotornabe mit den daran befestigten Rotorblättern rotiert. Da die einzelnen Statoren 121, 122, 123, 124 nicht nur mechanisch sondern auch elektrisch voneinander getrennt sind, werden in den Wicklungen auf den Statoren 121, 122, 123, 124 entsprechend Spannungen induziert.

Diese Spannungen sind Wechselspannungen, die durch Leiter 201, 202, 203, 204 zu Gleichrichtern 141, 142, 143, 144 geführt werden. Diese Leiter 201, 202, 203, 204 können beispielsweise Aluminiumschienen mit einer Querschnittsfläche von 4000 mm² sein. Dabei ist jedem Stator 121, 122, 123, 124 ein separater Gleichrichter zugeordnet. Daraus folgt, dass selbst wenn ein Gleichrichter ausfällt, nur ein Viertel des möglichen Ertrages nicht mehr zur Verfügung steht. Demnach stehen drei Viertel der möglichen Leistung immer noch zur Verfügung.

Jedem Gleichrichter 141, 142, 143, 144 ist ein Wechselrichter 161, 162, 163, 164 nachgeschaltet und mit diesem ebenfalls durch einen Leiter 205, 206, 207, 208 verbunden. Auch diese Leiter 205, 206, 207, 208 können Aluminiumschienen mit einer Querschnittsfläche von 4000 mm² sein.

Jedem Wechselrichter 161, 162, 163, 164 ist wiederum ein Transformator 181, 182, 183, 184 nachgeschaltet, über den die vom Wechselrichter 161, 162, 163, 164 erzeugte Wechselspannung auf z. B. 20kV hochtransformiert und z. B. in ein Mittelspannungsnetz eingespeist wird.

Auf diese Weise stehen, ausgehend von den Statorwicklungen, in welchen die Spannung durch den Läufer induziert wird, voneinander unabhängige Systeme 101, 102, 103, 104 mit Gleichrichter 141, 142, 143, 144, Wechselrichter 161, 162, 163, 164 und Transformator 181, 182, 183, 184 zur Verfügung, so dass ein Ausfall einer Komponente höchstens die Abgabe eines Viertels der möglichen Leistung verhindert.

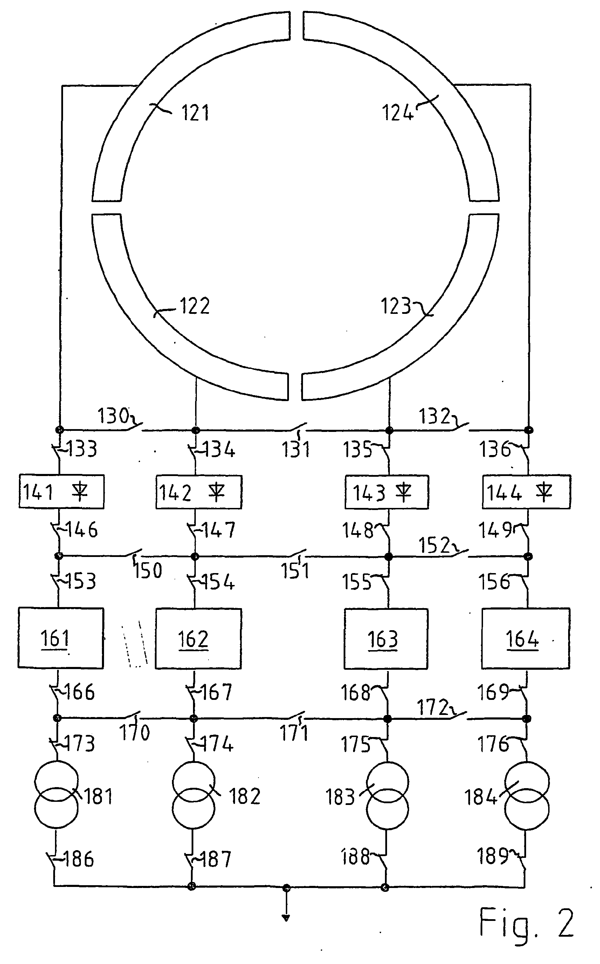

Fig. 2 ist im Vergleich zu Fig. 1 um Schalteinrichtungen 130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189 erweitert. Diese werden im Folgenden in ihrer Gesamtheit mit dem Bezugszeichen 130-136, 146-156, 166-176, 186-189 bezeichnet. Um die Übersichtlichkeit der Figur zu bewahren, werden hier die Bezugszeichen für die Leiter zwischen den Statoren 121, 122, 123, 124, den Gleichrichtern 141, 142, 143, 144 und den Wechselrichtern 161, 162, 163, 164 und die Markierungen der Systeme 101, 102, 103, 104 weggelassen.

Im Normalbetrieb sind die Schalteinrichtungen 130, 131, 132, 150, 151, 152, 170, 171, 172, die zwischen den Zuleitungen der einzelnen Komponenten vorgesehen sind, offen und die Schalteinrichtungen 133, 134, 135, 136, 146, 147, 148, 149, 153, 154, 155, 156, 166, 167, 168, 169, 173, 174, 175, 176, 186, 187, 188, 189 in den Zuleitungen und Ableitungen in Serie mit der jeweiligen Komponente sind im Normalbetrieb geschlossen, so dass jedes System 101, 102, 103, 104 (Fig. 1) getrennt von den übrigen arbeitet.

Die Schalteinrichtungen 130-136, 146-156, 166-176, 186-189 sind nun derart steuerbar, dass sie Verbindungen zwischen einzelnen Komponenten wenigstens zweier Systeme 101, 102, 103, 104 herstellen. Diese Verbindungen werden so hergestellt, dass durch jede Schalteinrichtung 130, 131, 132, 150, 151, 152, 170, 171, 172 stets die Zuleitungen zweier gleichartiger Komponenten parallel geschaltet werden.

Durch Betätigen der Schalteinrichtung 130 werden beispielsweise die Zuleitungen der Gleichrichter 141 und 142 parallel geschaltet, durch Betätigen der Schalteinrichtung 150 die Eingänge der Wechselrichter 161 und 162 und durch Betätigen der Schalteinrichtung 151 die Eingänge der Wechselrichter 162 und 163. Dabei sind selbstverständlich auch Kombinationen möglich.

Um eine Rückwirkung ausgefallener bzw. gestörter Komponenten auf die noch funktionsfähigen zu vermeiden, sind in den Zuleitungen und Ableitungen der einzelnen Komponenten Schalteinrichtungen 133, 146; 134, 147; 135, 148; 136, 149; 153, 166; 154, 167; 155, 168; 156, 169; 173, 186; 174, 187; 175, 188; 176, 189 vorgesehen, welche die jeweilige Komponente bevorzugt mit allen Leitungen freischalten.

Im Falle einer Störung einer Komponente kann somit durch eine geeignete Ansteuerung der Schalteinrichtungen 130-136, 146-156, 166-176, 186-189 diese Komponente umgangen werden, so dass die Windenergieanlage trotz der Störung immer noch den größten Teil der erzeugten Energie oder sogar die gesamte erzeugte Energie abgibt.

Um eine Überlastung der verbliebenen intakten Komponenten und damit deren frühzeitigen Ausfall zu vermeiden, sind diese Komponenten bevorzugt um etwa 20% überdimensioniert, so dass auch eine vorübergehende Beaufschlagung dieser verbleibenden Komponenten mit der Leistung einer ausgefallenen Komponenten keine Überlastung bewirkt.

Die Schalteinrichtungen 130-136, 146-156, 166-176, 186-189 sind dabei so angeordnet und werden in einer derartigen Weise gesteuert, dass zwar ein Umgehen einer Komponente wie z. B. eines Gleichrichters 141, 142, 143, 144 oder eines Wechselrichters 161, 162, 163, 164 möglich ist, jedoch nicht das Überspringen einer durch solche Komponenten verwirklichten Funktion.

Bei einem Ausfall z. B. des Wechselrichters 162 können die normalerweise offenen Schalteinrichtungen 150, 151, 152 geschlossen werden, um die übrigen Wechselrichter 161, 163, 164 mit der Zuleitung des Wechselrichters 162 zu verbinden. Gleichzeitig werden die normalerweise geschlossenen Schalteinrichtungen 154, 167 betätigt und dadurch geöffnet, um den ausgefallenen Wechselrichter 162 freizuschalten.

Schließlich können die normalerweise geöffneten Schalteinrichtungen 170, 171, 172 betätigt und damit geschlossen werden, so dass die drei Wechselrichter 161, 163, 164 wiederum alle vier Transformatoren 181, 1.82, 183, 184 beaufschlagen.

Auf diese Weise wird der ausgefallene Wechselrichter 162 umgangen und die Windenergieanlage kann trotz Ausfall des Wechselrichters 162 die gesamte verfügbare Energie abgeben.

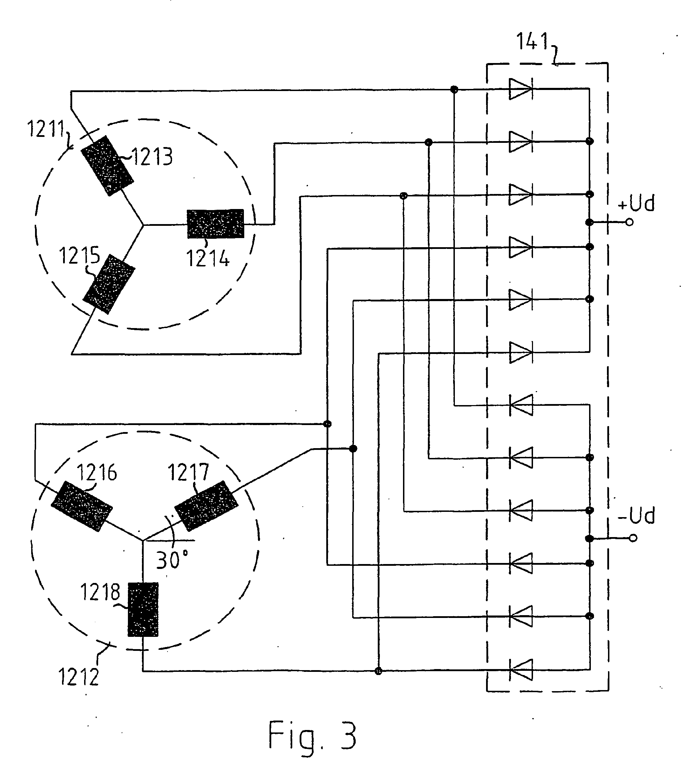

Fig. 3 zeigt eine besonders bevorzugte Ausführungsform der Statorwicklungen und des nachgeschalteten Gleichrichters am Beispiel des Systems 101. Die Statorwicklungen 1211 und 1212 mit dem nachgeschalteten Gleichrichter 141 sind hier beschrieben. Diese exemplarisch beschriebene Anordnung stimmt mit derjenigen der übrigen redundanten Systeme 102, 103, 104 überein.

Der in Fig.3 nicht dargestellte Stator 121 trägt zwei Statorwicklungen 1211, 1212, die gegeneinander um 30° versetzt sind. Beide Statorwicklungen 1211, 1212 sind als Drehstromwicklungen ausgeführt und weisen somit jeweils drei Phasenwicklungen 1213, 1214, 1215 und 1216, 1217, 1218 auf. Diese insgesamt sechs Phasenwicklungen 1213, 1214, 1215, 1216, 1217, 1218 sind an einen Sechs-Phasen-Gleichrichter 141 angeschlossen.

Der Phasenwinkel zwischen den einzelnen Phasen 1213, 1214, 1215 und 1216, 1217, 1218 einer Wicklung beträgt 120°. Nimmt man einen im Uhrzeigersinn drehenden Läufer (nicht dargestellt) an, so eilen die Phasen der in der Wicklung 1211 induzierten Spannungen den Phasen der in der Wicklung 1212 induzierten Spannungen um 30° nach. Da die Phasen einer Wicklung um 120° zueinander versetzt sind, eilt z. B. die Spannung in der Phase 1214 in der Wicklung 1211 der Spannung in der Phase 1217 in der wicklung 212 um 30° nach, der Phase 1218 der Wicklung 1212 gegenüber jedoch um 90° voraus. Dadurch kann in der Phase 1214 ein Teil der für die Phase 1218 benötigten Erregerleistung erzeugt werden.

Da beide Drehstromwicklungen 1211, 1212 auf einem Stator 121 angeordnet sind, ist hier bereits eine innere Redundanz verwirklicht, so dass bei Ausfall einer Wicklung 1211, 1212 immerhin noch die andere Wicklung 1212, 121 Leistung erzeugen kann, die dann zum Gleichrichter 141 geführt wird.

Eine bevorzugte Ausführungsform eines erfindungsgemäßen Wechselrichters 161, 162, 163, 164 ist in Figur 4 dargestellt. Durch das Vorsehen mehrerer Wechselrichter 161, 162, 163, 164 besteht eine äußere Redundanz.

Am Beispiel des Wechselrichters 161, dessen Aufbau mit dem Aufbau der übrigen Wechselrichter 162, 163, 164 übereinstimmt, ist in Figur 4 dargestellt, dass dieser aus drei Modulen 1611, 1612, 1613 aufgebaut ist, die eine innere Redundanz verwirklichen. Der Aufbau der einzelnen Module 1611, 1612, 1613 untereinander ist gleich; sie weisen im vorliegenden Fall IGBT als Schaltelemente auf, welche durch eine geeignete Ansteuerung die Wechselspannung aus der anliegenden Gleichspannung + Ud und -Ud erzeugen. Außerdem sind der Aufbau und die Wirkungsweise solcher Module im Stand der Technik bekannt. Daher wird hier auf eine detaillierte Beschreibung der Wirkungsweise verzichtet.

Jedes Modul 1611, 1612, 1613 erzeugt aus der angelegten Gleichspannung eine dreiphasige Wechselspannung und kann über Schalter 1614, 1615, 1616 mit den Ausgängen L1, L2, L3 des Wechselrichters 161 verbunden werden.

Die Anzahl der Module in einem Wechselrichter 161, 162, 163, 164 ist jedoch nicht auf drei beschränkt. Ebenso ist es möglich, eine andere Anzahl von Modulen 1611,1612,1613 und bevorzugt eine größere Anzahl auszuwählen, um neben der äußeren Redundanz auch eine gewünschte innere Redundanz zu verwirklichen.

Durch die Anzahl der Module kann wiederum eine Überdimensionierung verwirklicht werden, um auch hier einer Überlastung und damit einem vorzeitigen Ausfall im Falle einer Störung in einem anderen Wechselrichter 161, 162, 163, 164 vorzubeugen.

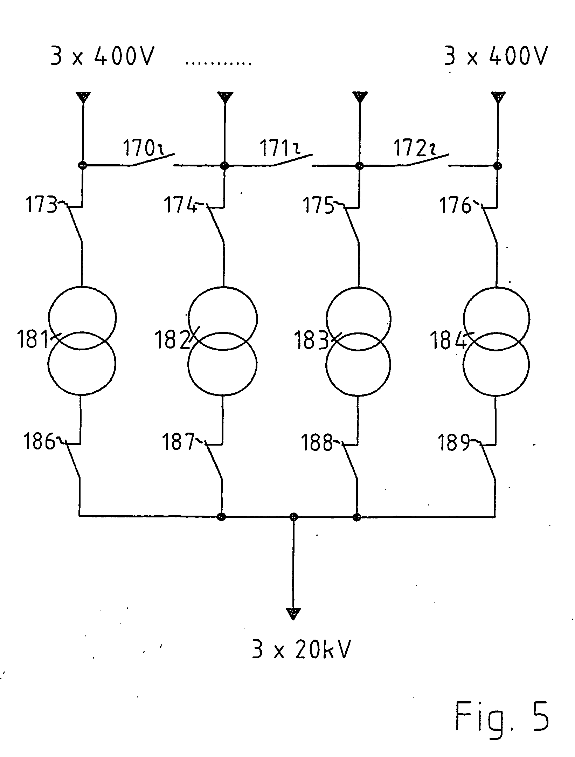

Fig. 5 zeigt eine redundante Anordnung von bevorzugt als Drehstromtransformatoren ausgeführten Transformatoren 181, 182, 183, 184, die primärseitig z. B. jeweils mit 3 x 400V von den Wechselrichtern 161, 162, 163, 164 beaufschlagt werden und sekundärseitig eine auf beispielsweise 3 x 20 kV transformierte Wechselspannung z. B. an ein Mittelspannungsnetz abgeben.

Auch diese Transformatoren 181, 182, 183, 184 sind bevorzugt überdimensioniert, um auch nach einer Beaufschlagung mit zusätzlicher Leistung von einem gestörten bzw. ausgefallenen Transformator 181, 182, 183, 184 zuverlässig arbeiten zu können.

In Fig. 5 sind die Schalteinrichtungen 170, 171, 172, 173, 174, 175, 176, 186, 187, 188, 189 nochmals dargestellt, die eine Umgehung eines ausgefallenen Transformators 181, 182, 183, 184 ermöglichen. Dabei gestatten Schalteinrichtungen 173, 186; 174, 187; 175, 188; 176, 189 die Abschaltung der Primär- und Sekundärwicklungen der ausgefallenen Transformatoren 181, 182, 183, 184, um so eine Impedanzverschiebung durch die Parallelschaltung der Primärwicklungen und/oder der Sekundärwicklungen der Transformatoren 181, 182, 183, 184 beim Schließen der Schalteinrichtungen 170, 171, 172 zu vermeiden.

Dazu sind die primärseitig angeordneten Schalteinrichtungen 173, 174, 175, 176 und die sekundärseitig angeordneten Schalteinrichtungen 186, 187, 188, 189 so ausgebildet, dass sie alle Anschlüsse der entsprechenden Transformatorwicklung galvanisch trennen. Die Steuerung erfolgt dabei bevorzugt in der Weise, dass stets beide Schalteinrichtungen 173, 186; 174, 187; 175, 188; 176, 189 an einem Transformator 181, 182, 183, 184, also z. B. die primärseitige Schalteinrichtung 174 und die sekundärseitige Schalteinrichtung 187 an dem Transformator 182 gleichzeitig betätigt werden, um den Transformator 182 sicher freizuschalten.

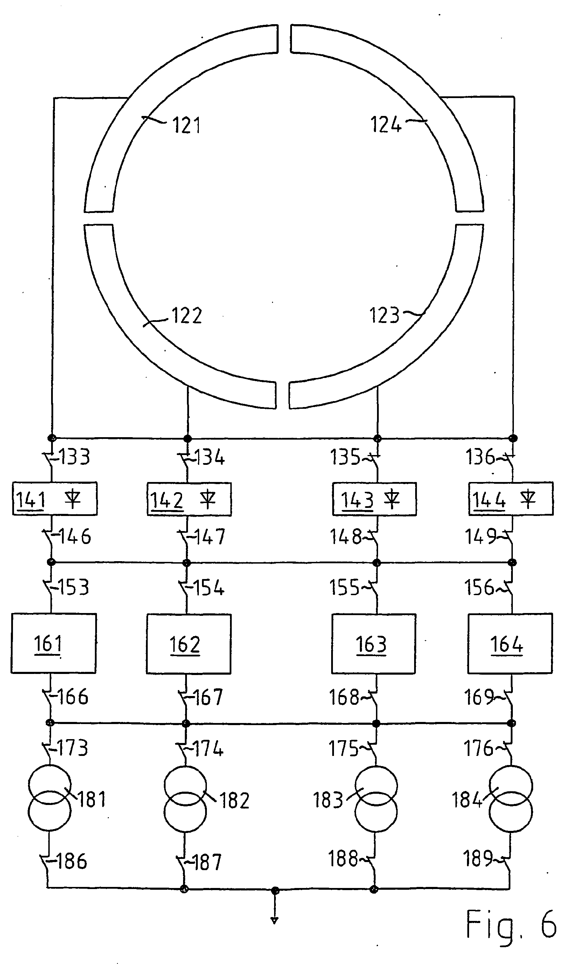

In Fig. 6 ist eine zweite Ausführungsform der vorliegenden Erfindung dargestellt. Diese Ausführungsform entspricht in weiten Teilen der in Fig. 2 gezeigten Ausführungsform und unterscheidet sich von dieser durch die Einsparung der Schalteinrichtungen 130, 131, 132, 150, 151, 152, 170, 171, 172 in Fig. 2 zwischen jeweils zwei Komponenten, so dass die gleichartigen Komponenten der einzelnen Systeme 101, 102, 103, 104 in Figur 1 parallel geschaltet sind und demnach im Normalbetrieb alle mit etwa einem Viertel der erzeugten Leistung beaufschlagt werden.

Entsprechend der Anordnung in der ersten Ausführungsform sind die Schalteinrichtungen 133, 134, 135, 136, 146, 147, 148, 149, 153, 154, 155, 156, 166, 167, 168, 169, 173, 174, 175, 176, 186, 187, 188, 189 im Normalbetrieb geschlossen, so dass alle Systeme 101, 102, 103, 104 arbeiten.

Tritt nun an einer Komponente eine Störung auf, wird durch Öffnen der in der Zuleitung und der Ableitung der betroffenen Komponente angeordneten Schalteinrichtungen 133, 146; 134, 147; 135, 148; 136, 149; 153, 166; 154, 167; 155, 168; 156, 169; 173, 186; 174, 187; 175, 188; 176, 189 diese Komponente freigeschaltet und die übrigen Komponenten in den anderen Systemen 101, 102, 103, 104 (Fig. 1) werden automatisch mit einer höheren Leistung beaufschlagt.

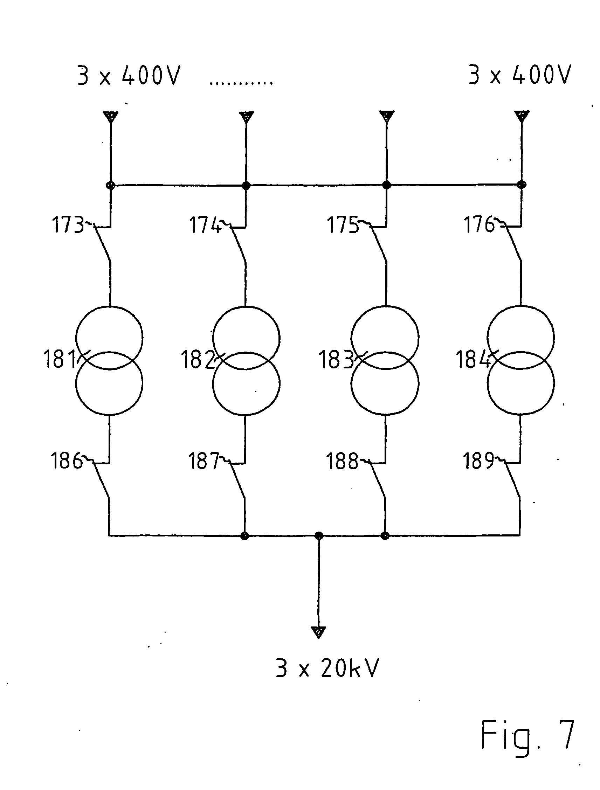

Dies geht ebenfalls nochmal deutlich aus der Fig. 7 hervor, in welcher die Transformatoren 181, 182, 183, 184 durch die normalerweise geschlossenen Schalteinrichtungen 173, 174, 175, 176, 186, 187, 188, 189, parallel geschaltet sind. Erweist sich nun ein Transformator 181, 182, 183, 184 als fehlerhaft oder gestört, so werden die zugeordneten Schalteinrichtungen 173, 186; 174, 187; 175, 188; 176, 189 betätigt (geöffnet) und der betroffene Transformator ist freigeschaltet, während die übrigen Transformatoren 181, 182, 183, 184 jeweils mit einer höheren Leistung beaufschlagt werden und die Windenergieanlage immer noch die gesamte erzeugte Energie abgibt.

Bevorzugt sind die beispielsweise in Fig. 1 gezeigten Gleichrichter 141,142, 143, 144 im Maschinenhaus, also in der Gondel der Windenergieanlage untergebracht. Die Wechselrichter 161, 162, 163, 164 sind bevorzugt im Fußbereich des Turmes einer Windenergieanlage untergebracht und Wechselrichter und Gleichrichter sind über Gleichstromschienen 205, 206, 207, 208 miteinander verbunden. Der Transformator zur Einspeisung der erzeugten elektrischen Leistung in das Netz kann bei Ausbildung einer Off-shore-Windenergieanlage auch im untersten Fußbereich eines Turmes der Windenergieanlage angebracht werden, also unterhalb der Wasserlinie.

## Patentansprüche

1. Windenergieanlage mit einer Generatoranordnung, bestehend aus einem Läufer (Rotor) und wenigstens zwei Statoren (121, 122, 123, 124) mit jeweils wenigstens einer Statorwicklung (1211, 1212), wobei jedem Stator wenigstens ein Strang, bestehend aus einem Gleichrichter, einem Wechselrichter und einem Transformator, zugeordnet ist, so dass auf diese Weise voneinander unabhängige Systeme (101, 102, 103, 104), jeweils mit den Komponenten Gleichrichter, Wechselrichter und Transformator, zur Verfügung gestellt werden,
**dadurch gekennzeichnet, dass** verschiedenen Strängen unterschiedliche Transformatoren zugeordnet sind, wobei zwischen Zuleitungen der einzelnen Komponenten Schalteinrichtungen (130, 131, 132) vorgesehen sind, wobei die Schalteinrichtungen (130, 131, 132) derart steuerbar sind, dass sie Verbindungen zwischen einzelnen Komponenten wenigstens zweier Systeme (101, 102, 103, 104) derart herstellen, dass durch jede Schalteinrichtung (130, 131, 132) stets die Zuleitungen zweier gleichartiger Komponenten parallel geschaltet werden.

2. Windenergieanlage nach Anspruch 1,
**gekennzeichnet durch** kreisringsegmentförmig ausgebildete Statoren (121, 122, 123, 124).

3. Windenergieanlage nach Anspruch 2,
**gekennzeichnet durch** eine kreisringförmige Anordnung der Statoren (121, 122, 123, 124) um den drehbar gelagerten Läufer der Generatoranordnung.

4. Windenergieanlage nach einem der vorstehenden Ansprüche,
**gekennzeichnet durch** vier Statoren (121, 122, 123, 124).

5. Windenergieanlage nach einem der vorstehenden Ansprüche,
**gekennzeichnet durch** wenigstens einen Stator (121, 122, 123, 124) mit zwei Wicklungen (1211, 1212).

6. Windenergleanlage nach einem der vorstehenden Ansprüche,
**gekennzeichnet durch** zwei Wicklungen (1211, 1212) auf jedem Stator (121, 122, 123, 124).

7. Windenergieanlage nach einem der vorstehenden Ansprüche,
**dadurch gekennzeichnet, dass** wenigstens eine Statorwicklung (1211, 1212) eine Drehstromwicklung ist.

8. Windenergieanlage nach einem der vorstehenden Ansprüche,
**dadurch gekennzeichnet, dass** wenigstens eine Wicklung (1211, 1212) jedes Stators (121, 122, 123, 124) eine Drehstromwicklung ist.

9. Windenergieanlage nach einem der vorstehenden Ansprüche,
**gekennzeichnet durch** ausnahmslos als Drehstromwicklungen ausgebildete Statorwicklungen (1211, 1212).

10. Windenergieanlage nach einem der Ansprüche 5 bis 9.
**dadurch gekennzeichnet, dass** zwei Wicklungen (1211, 1212) wenigstens eines Stators (121, 122, 123, 124) elektrisch um 30° gegeneinander versetzt sind.

11. Windenergieanlage nach einem der Ansprüche 6 bis 9,
**dadurch gekennzeichnet, dass** die Wicklungen (1211, 1212) auf jedem Stator (121, 122, 123, 124) elektrisch jeweils um 30° gegeneinander versetzt sind.

12. Windenergieanlage nach einem der vorstehenden Ansprüche,
**gekennzeichnet durch** wenigstens einen jedem Stator (121, 122, 123, 124) zugeordneten Gleichrichter (141, 142, 143, 144).

13. Windenergieanlage nach einem der vorstehenden Ansprüche,
**gekennzeichnet durch** einen jeder Statorwicklung (1211, 1212) zugeordneten Gleichrichter (141, 142, 143, 144).

14. Windenergieanlage nach einem der vorstehenden Ansprüche,
**gekennzeichnet durch** wenigstens einen ein vorgegebenes Maß überdimensionierten Gleichrichter (141, 142, 143, 144).

15. Windenergieanlage nach einem der vorstehenden Ansprüche,
**dadurch gekennzeichnet, dass** sämtliche Gleichrichter (141, 142, 143, 144) ein vorgegebenes Maß überdimensioniert sind.

16. Windenergieanlage nach einem der vorstehenden Ansprüche,
**gekennzeichnet durch** Verbindungen der Zuleitungen der Gleichrichter (141, 142, 143, 144) untereinander und/oder Verbindungen der Ableitungen der Gleichrichter (141, 142, 143, 144) untereinander.

17. Windenergieanlage nach einem der vorstehenden Ansprüche,
**gekennzeichnet durch** wenigstens eine Schalteinrichtung (133, 146; 134, 147; 135, 148; 136, 149) in der Zuleitung und/oder Ableitung jedes Gleichrichters (141, 142, 143, 144).

18. Windenergieanlage nach Anspruch 17,
**gekennzeichnet durch** eine gemeinsame Betätigung der Schalteinrichtungen (130, 131, 132) in der Zuleitung und/oder Ableitung des freizuschaltenden Gleichrichters (141, 142, 143, 144).

19. Windenergieanlage nach Anspruch 17 oder 18,
**dadurch gekennzeichnet, dass** die Schalteinrichtungen (133, 146; 134, 147; 135, 148; 136, 149) sämtliche Anschlüsse des freizuschaltenden Gleichrichters (141, 142, 143, 144) auftrennen.

20. Windenergieanlage nach einem der vorstehenden Ansprüche,
**gekennzeichnet durch** wenigstens einen jedem Stator (121, 122, 123, 124) zugeordneten Wechselrichter (161, 162, 163, 164).

21. Windenergieanlage nach einem der vorstehenden Ansprüche,
**gekennzeichnet durch** wenigstens einen jeder Statorwicklung (1211, 1212) zugeordneten Wechselrichter (161, 162, 163, 164).

22. Windenergieanlage nach einem der vorstehenden Ansprüche,
**gekennzeichnet durch** wenigstens einen zwei oder mehr Wechselrichtermodule (1611, 1612, 1613) umfassenden Wechselrichter (161, 162, 163, 164).

23. Windenergieanlage nach einem der vorstehenden Ansprüche,
**dadurch gekennzeichnet, dass** die Wechselrichter (161, 162, 163, 164) ausnahmslos wenigstens zwei Wechselrichtermodule (1611, 1612, 1613) umfassen.

24. Windenergieanlage nach einem der vorstehenden Ansprüche,
**dadurch gekennzeichnet, dass** jeder Wechselrichter (161, 162, 163, 164) aus wenigstens drei Wechselrichtermodulen (1611, 1612, 1613) aufgebaut ist.

25. Windenergieanlage nach einem der vorstehenden Ansprüche,
**gekennzeichnet durch** wenigstens einen ein vorgegebenes Maß überdimensionierten Wechselrichter (161, 162, 163, 164).

26. Windenergieanlage nach einem der vorstehenden Ansprüche,
**dadurch gekennzeichnet, dass** sämtliche Wechselrichter (161, 162, 163, 164) ein vorgegebenes Maß überdimensioniert sind.

27. Windenergieanlage nach einem der vorstehenden Ansprüche,
**gekennzeichnet durch** Verbindungen der Zuleitungen der Wechselrichter (161, 162, 163, 164) untereinander und/oder Verbindungen der Ableitungen der Wechselrichter (161, 162, 163, 164) untereinander.

28. Windenergieanlage nach einem der vorstehenden Ansprüche,
**gekennzeichnet durch** wenigstens eine Schalteinrichtung (153, 166; 154, 167; 155, 168; 156, 169) in der Zuleitung und/oder Ableitung jedes Wechselrichters (161, 162, 163, 164).

29. Windenergieanlage nach einem der vorstehenden Ansprüche,
**gekennzeichnet durch** eine gemeinsame Betätigung der Schalteinrichtungen (150, 151, 152) in der Zuleitung und/oder Ableitung des freizuschaltenden Wechselrichters (161, 162, 163, 164).

30. Windenergieanlage nach einem der Ansprüche 28 oder 29,
**dadurch gekennzeichnet, dass** die Schalteinrichtungen (153, 166; 154, 167; 155, 168; 156, 169) sämtliche Anschlüsse des freizuschaltenden Wechselrichters (141, 142, 143, 144) auftrennen.

31. Windenergieanlage nach einem der vorstehenden Ansprüche,
**gekennzeichnet durch** wenigstens einen jedem Stator (121, 122, 123, 124) zugeordneten Transformator (181, 182, 183, 184) .

32. Windenergieanlage nach einem der vorstehenden Ansprüche,
**gekennzeichnet durch** wenigstens einen jeder Statorwicklung (1211, 1212) zugeordneten Transformator (181, 182, 183, 184).

33. Windenergieanlage nach einem der vorstehenden Ansprüche,
**gekennzeichnet durch** wenigstens einen als Drehstromtransformator ausgebildeten Transformator (181, 182, 183,184).

34. Windenergieanlage nach einem der vorstehenden Ansprüche,
**dadurch gekennzeichnet, dass** die Transformatoren (181, 182, 183, 184) ausnahmslos als Drehstromtransformatoren ausgebildet sind.

35. Windenergieanlage nach einem der vorstehenden Ansprüche,
**gekennzeichnet durch** wenigstens einen ein vorgegebenes Maß überdimensionierten Transformator (181, 182, 183, 184).

36. Windenergieanlage nach einem der vorstehenden Ansprüche,
**dadurch gekennzeichnet, dass** sämtliche Transformatoren (181, 182, 183, 184) ein vorgegebenes Maß überdimensioniert sind.

37. Windenergieanlage nach einem der vorstehenden Ansprüche,
**gekennzeichnet durch** Verbindungen der Zuleitungen der Transformatoren (181, 182, 183, 184) untereinander und/oder Verbindungen der Ableitungen der Transformatoren (181, 182, 183, 184) untereinander.

38. Windenergieanlage nach einem der vorstehenden Ansprüche,
**gekennzeichnet durch** Schalteinrichtungen (173, 174, 175, 176, 186, 187, 188, 189) an der Primärseite und an der Sekundärseite jedes Transformators (181, 182, 183, 184).

39. Windenergieanlage nach Anspruch 38,
**gekennzeichnet durch** eine gemeinsame Betätigung der Schalteinrichtung (173, 174, 175, 176) an der Primärseite eines freizuschaltenden Transformators (181, 182, 183, 184) und der Schalteinrichtung (186, 187, 188, 189) an der Sekundärseite des selben Transformators (181, 182, 183, 184).

40. Windenergieanlage nach Anspruch 38,
**dadurch gekennzeichnet, dass** die Schalteinrichtungen (173, 174, 175, 176, 186, 187, 188, 189) so ausgebildet sind, dass sie die Primärseite und die Sekundärseite des Transformators (181, 182, 183, 184) mit allen Anschlüssen galvanisch freischalten.

41. Windenergieanlage nach einem der vorstehenden Ansprüche,
**gekennzeichnet durch** eine Steuerungsvorrichtung, welche die Schalteinrichtungen (130, 131, 132, 133, 134, 135, 136, 146, 147, 148, 149, 150, 151; 152, 153, 154, 155, 156, 166, 167, 168, 169, 170, 171, 172, 173, 174, 175, 176, 186, 187, 188, 189) in Abhängigkeit von der ausgefallenen oder gestörten Komponente steuert.

42. Windenergieanlage nach einem der vorstehenden Ansprüche,
**gekennzeichnet durch** eine Steuerungsvorrichtung, welche die Schalteinrichtungen (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) unter Berücksichtigung der erzeugten bzw. zu schaltenden Leistung steuert.

43. Windenergieanlage nach einem der vorstehenden Ansprüche,
**dadurch gekennzeichnet, dass** die Schalteinrichtungen (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) mindestens teilweise elektromechanische Schalteinrichtungen sind.

44. Windenergieanlage nach einem der vorstehenden Ansprüche,
**dadurch gekennzeichnet, dass** die Schalteinrichtungen (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) mindestens teilweise elektronische Schalteinrichtungen sind.

45. Windenergieanlage, insbesondere nach einem der vorhergehenden Ansprüche, mit einer Generatoranordnung, bestehend aus einem Läufer (Rotor) und mindestens einem Stator, welcher den Läuferumfang nur zum Teil umschließt.

46. Windenergieanlage nach Anspruch 45,
**dadurch gekennzeichnet, dass** die Generatoranordnung n Statoren aufweist, die insgesamt den Läufer vollständig umschließen, wobei n eine natürliche Zahl > 1 ist.

47. Windenergieanlage nach einem der vorhergehenden Ansprüche 45, 46,
**dadurch gekennzeichnet, dass** alle Statoren von einem gemeinsamen Statorring getragen werden.

48. Windenergieanlage nach einem der Ansprüche 45 bis 47,
**dadurch gekennzeichnet, dass** jeder einzelne Stator unter Beibehaltung der anderen Statoren ausgewechselt werden kann.

## Claims

1. Wind power installation having a generator arrangement consisting of a rotor and at least two stators (121, 122, 123, 124) each with at least one stator winding (1211, 1212), wherein associated with each stator is at least one line configuration consisting of a rectifier, an inverter and a transformer, so that mutually independent systems (101, 102, 103, 104) each having the components rectifier, inverter and transformer are thereby made available,
**characterised in that** different transformers are associated with different line configurations, wherein switch devices (130, 131, 132) are provided between incoming lines of the individual components, wherein the switch devices (130, 131, 132) are controllable in such a manner that they make connections between individual components of at least two systems (101, 102, 103, 104) in such a manner that the incoming lines of two components of the same type are connected in parallel by each switch device (130, 131, 132).

2. Wind power installation according to claim 1,
**characterised by** stators (121, 122, 123, 124) that are in the form of segments of a circular ring.

3. Wind power installation according to claim 2,
**characterised by** the stators (121, 122, 123, 124) being disposed in the form of a circular ring around the rotatably arranged rotor of the generator arrangement.

4. Wind power installation according to any one of the preceding claims, **characterised by** four stators (121, 122, 123, 124).

5. Wind power installation according to any one of the preceding claims,
**characterised by** at least one stator (121, 122, 123, 124) with two windings (1211, 1212).

6. Wind power installation according to any one of the preceding claims,
**characterised by** two windings (1211, 1212) on each stator (121, 122, 123, 124),

7. Wind power installation according to any one of the preceding claims,
**characterised in that** at least one stator winding (1211, 1212) is a three-phase current winding.

8. Wind power installation according to any one of the preceding claims,
**characterised in that** at least one winding (1211, 1212) of each stator (121, 122, 123, 124) is a three-phase current winding,

9. Wind power installation according to any one of the preceding claims,
**characterised by** stator windings (1211, 1212) that without exception are in the form of three-phase current windings.

10. Wind power installation according to any one of claims 5 to 9,
**characterised in that** two windings (1211, 1212) of at least one stator (121, 122, 123, 124) are electrically offset from each other by 30°.

11. Wind power installation according to any one of claims 6 to 9,
**Characterised in that** the windings (1211, 1212) on each stator (121, 122, 123, 124) are electrically offset from each other by 30°.

12. Wind power installation according to any one of the preceding claims,
**characterised by** at least one rectifier (141, 142, 143, 144) associated with each stator (121, 122, 123, 124).

13. Wind power installation according to any one of the preceding claims,
**characterised by** a rectifier (141, 142, 143, 144) associated with each statorwinding (1211. 1212).

14. Wind power installation according to any one of the preceding claims,
**characterised by** at least one rectifier (141, 142, 143, 144) that is over-dimensioned by a predetermined amount,

15. Wind power installation according to any one of the preceding claims,
**characterised in that** all the rectifiers (141, 142, 143. 144) are over-dimensioned by a predetermined amount,

16. Wind power installation according to any one of the preceding claims,
**characterised by** connections of the incoming lines of the rectifiers (141, 142, 143, 144) to one another and/or connections of the outgoing lines of the rectifiers (141, 142, 143, 144) to one another.

17. Wind power installation according to any one of the preceding claims,
**characterised by** at least one switch device (133, 146; 134, 147; 135, 148; 136, 149) in the incoming line and/or outgoing line of each rectifier (141, 142, 143, 144).

18. Wind power installation according to claim 17,
**characterised by** collective actuation of the switch devices (130, 131, 132) in the incoming line and/or outgoing line of the rectifier (141, 142, 143, 144) to be disconnected

19. Wind power installation according to claim 17 or 18,
**characterised in that** the switch devices (133, 146; 134, 147; 135, 148; 136, 149) separate all the terminals of the rectifier (141, 142, 143, 144) to be disconnected.

20. Wind power installation according to any one of the preceding claims,
**characterised by** at least one inverter (161, 162, 163, 164) associated with each stator (121, 122, 123, 124).

21. Wind power installation according to any one of the preceding claims,
**characterised by** at least one inverter (161, 162. 163, 164) associated with each stator winding (1211, 1212).

22. Wind power installation according to any one of the preceding claims,
**characterised by** at least one inverter (161, 162, 163, 164) comprising two or more inverter modules (1611, 1612, 1613),

23. Wind power installation according to any one of the preceding claims,
**characterised in that** the inverters (161. 182. 163, 164) without exception comprise at least two inverter modules (1611, 1612, 1613),

24. Wind power installation according to any one of the preceding claims,
**characterised in that** each inverter (161, 162, 163, 164) is made up of at least three inverter modules (1611, 1612, 1613).

25. Wind power installation according to any one of the preceding claims,
**characterised by** at least one inverter (161, 162, 163, 164) that is over-dimensioned by a predetermined amount.

26. Wind power installation according to any one of the preceding claims,
**characterised in that** all the inverters (161, 162, 163, 164) are over-dimensioned by a predetermined amount.

27. Wind power installation according to any one of the preceding claims.
**characterised by** connections of the incoming lines of the inverters (161, 162, 163, 164) to one another and/or connections of the outgoing lines of the inverters (161, 162, 163, 164) to one another.

28. Wind power installation according to any one of the preceding claims,
**characterised by** at least one switch device ((153, 166; 154, 167; 155, 168; 156, 169) in the incoming line and/or outgoing line of each inverter (161, 162. 163, 164).

29. Wind power installation according to any one of the preceding claims,
**characterised by** collective actuation of the switch devices (150, 151, 152) in the incoming line and/or outgoing line of the inverter (161, 162, 163, 164) to be disconnected.

30. Wind power installation according to either of claims 28 and 29,
**characterised in that** the switch devices (153, 166: 154, 167; 155, 168; 156, 169) separate all the terminals of the inverter (141, 142, 143, 144) to be disconnected.

31. Wind power installation according to any one of the preceding claims,
**characterised by** at least one transformer (181, 182, 183, 184) associated with each stator (121, 122, 123, 124),

32. Wind power installation according to any one of the preceding claims,
**characterised by** at least one transformer (181, 182, 183, 184) associated with each stator winding (1211, 1212).

33. Wind power installation according to any one of the preceding claims,
**characterised by** at least one transformer (181, 182, 183, 184) in the form of a three-phase current transformer.

34. Wind power installation according to any one of the preceding claims,
**characterised in that** the transformers (181, 182, 183, 184) are without exception in the form of three-phase current transformers.

35. Wind power installation according to any one of the preceding claims,
**characterised by** at least one transformer (181, 182, 183, 184) that is over-dimensioned by a predetermined amount.

36. Wind power installation according to any one of the preceding claims,
**characterised in that** all the transformers (181, 182, 183, 184) are over-dimensioned by a predetermined amount.

37. Wind power installation according to any one of the preceding claims,
**characterised by** connections of the incoming lines of the transformers (181, 182, 183, 184) to one another and/or connections of the outgoing lines of the transformers (181, 182, 183, 184) to one another.

38. Wind power installation according to any one of the preceding claims,
**characterised by** switch devices (173, 174, 175, 176, 186. 187, 188, 189) on the primary side and on the secondary side of each transformer (181, 182, 183, 184).

39. Wind power installation according to claim 38,
**characterised by** collective actuation of the switch device (173, 174, 175, 176) on the primary side of a transformer (181, 182, 183, 184) to be disconnected and the switch device (186, 187, 188, 189) on the secondary side of the same transformer (181, 182, 183, 184).

40. Wind power installation according to claim 38.
**characterised in that** the switch devices (173, 174, 175, 176, 186, 187, 188, 189) are so constructed that they galvanically disconnect the primary side and the secondary side of the transformer (181, 182, 183, 184) with all terminals.

41. Wind power installation according to any one of the preceding claims,
**characterised by** a control device which controls the switch devices (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) in dependence on the failed or faulty component.

42. Wind power installation according to any one of the preceding claims,
**characterised by** a control device which controls the switch devices (130, 131, 132, 133, 134, 135, 136, 146, 147, 148, 149, 150, 151, 152, 153, 154, 155. 156, 166, 167, 168, 169, 170, 171, 172, 173, 174, 175, 176, 186, 187, 188, 189) taking into consideration the output power produced or to be switched.

43. Wind power installation according to any one of the preceding claims,
**characterised in that** at least some of the switch devices (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) are electromechanical switch devices.

44. Wind power installation according to any one of the preceding claims,
**characterised in that** at least some of the switch devices (130, 131, 132, 133, 134. 135, 136, 146, 147, 148, 149, 150, 151, 152, 153; 154, 155, 156, 166, 167, 168, 169, 170, 171, 172, 173, 174, 175, 176, 186, 187, 188, 189) are electronic switch devices.

45. Wind power installation, especially according to any one of the preceding claims, having a generator arrangement consisting of a rotor and at least one stator that only partially surrounds the periphery of the rotor.

46. Wind power installation according to claim 45,
**characterised in that** the generator arrangement has n stators which all together completely surround the rotor, wherein n is a natural number > 1.

47. Wind power installation according to one of the preceding claims 45, 46,
**characterised in that** all the stators are carried by a common stator ring.

48. Wind power installation according to any one of claims 45 to 47,
**characterised in that** each individual stator can be replaced while the other stators are retained.

## Revendications

1. Installation de production d'énergie par voie éolienne ou installation éolienne comprenant un agencement de générateur, constitué d'un induit ou rotor et d'au moins deux stators (121, 122, 123, 124) comprenant chacun au moins un enroulement de stator (1211, 1212), installation dans laquelle chaque stator est associée au moins une branche constituée d'un redresseur, d'un onduleur et d'un transformateur, de manière à mettre ainsi à disposition des systèmes indépendants (101, 102, 103, 104), chacun avec les composants redresseur, onduleur et transformateur,
**caractérisée en ce qu'**à des branches différentes sont associés des transformateurs différents, des dispositifs de commutation (130, 131, 132) étant prévus entre des conducteurs d'entrée des composants individuels, les dispositifs de commutation (130, 131, 132) pouvant être commandés de manière à établir des liaisons entre des composants individuels d'au moins deux systèmes (101, 102, 103, 104) de façon telle que par l'intermédiaire de chaque dispositif de commutation (130, 131, 132), les conducteurs d'entrée toujours de deux composants de même type, soient commutés en parallèle.

2. Installation éolienne selon la revendication 1,
**caractérisée par** des stators (121, 122, 123, 124) de configuration en forme de segment d'anneau circulaire.

3. Installation éolienne selon la revendication 2,
**caractérisée par** une disposition en anneau circulaire des stators (121, 122, 123, 124) autour du rotor monté rotatif de l'agencement de générateur.

4. Installation éolienne selon l'une des revendications précédente,
**caractérisée par** quatre stators (121, 122, 123, 124).

5. Installation éolienne selon l'une des revendications précédentes,
**caractérisée par** au moins une stator (121, 122, 123, 124) avec deux enroulements (1211, 1212).

6. Installation éolienne selon l'une des revendications précédentes,
**caractérisée par** deux enroulements (1211, 1212) sur chaque stator (121, 122, 123, 124).

7. Installation éolienne selon l'une des revendications précédentes,
**caractérisé en ce qu'**au moins un enroulement de stator (1211, 1212) est un enroulement triphasé.

8. Installation éolienne selon l'une des revendications précédentes,
**caractérisée en ce qu'**au moins une enroulement (1211, 1212) de chaque stator (121, 122, 123, 124) est un enroulement triphasé.

9. Installation éolienne selon l'une des revendications précédentes,
**caractérisée par** des enroulements de stator (1211, 1212) réalisés tous sans exception sous forme d'enroulements triphasés.

10. Installation éolienne selon l'une des revendications 5 à 9,
**caractérisée en ce que** deux enroulements (1211, 1212) d'au moins un stator (121, 122, 123, 124) sont décalés électriquement l'un par rapport à l'autre de 30°.

11. Installation éolienne selon l'une des revendications 6 à 9,
**caractérisée en ce que** les enroulements (1211, 1212) sur chaque stator (121, 122, 123, 124) sont respectivement décalés électriquement les uns par rapport aux autres de 30°.

12. Installation éolienne selon l'une des revendications précédentes,
**caractérisée par** au moins un redresseur (141, 142, 143, 144) associé à chaque stator (121, 122, 123, 124).

13. Installation éolienne selon l'une des revendications précédentes,
**caractérisée par** un redresseur (141, 142, 143, 144) associé à chaque enroulement de stator (1211, 1212).

14. Installation éolienne selon l'une des revendications précédentes,
**caractérisée par** au moins un redresseur (141, 142, 143, 144) surdimensionné d'une valeur prescrite.

15. Installation éolienne selon l'une des revendications précédentes,
**caractérisée en ce que** la totalité des redresseurs (141, 142, 143, 144) sont surdimensionnés d'une valeur prescrite.

16. Installation éolienne selon l'une des revendications précédentes,
**caractérisée par** des liaisons entre eux des conducteurs d'entrée des redresseurs (141, 142, 143, 144) et/ou des liaisons entre eux des conducteurs de sortie des redresseurs (141, 142, 143, 144).

17. Installation éolienne selon l'une des revendications précédentes,
**caractérisée par** au moins un dispositif de commutation (133, 146 ; 134, 147 ; 135, 148 ; 136, 149) dans le conducteur d'entrée et/ou le conducteur de sortie de chaque redresseur (141, 142, 143, 144).

18. Installation éolienne selon la revendication 17,
**caractérisée par** un actionnement commun des dispositifs de commutation (130, 131, 132) dans le conducteur d'entrée et/ou le conducteur de sortie du redresseur (141, 142, 143, 144) à déconnecter.

19. Installation éolienne selon la revendication 17 ou 18,
**caractérisée en ce que** les dispositifs de commutation (133, 146 ; 134, 147 ; 135, 140 ; 136, 149) ouvrent la totalité des connexions du redresseur (141, 142, 143, 144) à déconnecter.

20. Installation éolienne selon l'une des revendications précédentes,
**caractérisée par** au moins un onduleur (161, 162, 163, 164) associé chaque stator (121, 122, 123, 124).

21. Installation éolienne selon l'une des revendications précédentes,
**caractérisée par** au moins un onduleur (161, 162, 163, 164) associé à chaque enroulement de stator (1211, 1212).

22. Installation éolienne selon l'une des revendications précédentes,
**caractérisée par** au moins un onduleur (161, 162, 163, 164) comprenant deux modules d'onduleur (1611, 1612, 1613) ou davantage.

23. Installation éolienne selon l'une des revendications précédentes,
**caractérisée en ce que** les onduleurs (161, 162, 163, 164) comprennent tous sans exception au moins deux modules d'onduleur (1611, 1612, 1613).

24. Installation éolienne selon l'une des revendications précédentes,
**caractérisée en ce que** chaque onduleur (161, 162, 163, 164) est construit en au moins trois modules d'onduleur (1611, 1612, 1613).

25. Installation éolienne selon l'une des revendications précédentes,
**caractérisée par** au moins un onduleur (161, 162, 163, 164) surdimensionné d'une valeur prescrite.

26. Installation éolienne selon l'une des revendications précédentes,
**caractérisée en ce que** la totalité des onduleurs (161, 162, 163, 164) sont surdimensionnés d'une valeur prescrite.

27. Installation éolienne selon l'une des revendications précédentes,
**caractérisée par** des liaisons entre eux des conducteurs d'entrée des onduleurs (161, 162, 163, 164) et/ou des liaisons entre eux des conducteurs de sortie des onduleurs (161, 162, 163, 164).

28. Installation éolienne selon l'une des revendications précédentes,
**caractérisée par** au moins un dispositif de commutation (153, 166 ; 154, 167 ; 155, 168 ; 156, 169) dans le conducteur d'entrée et/ou le conducteur de sortie de chaque onduleur (161, 162, 163, 164).

29. Installation éolienne selon l'une des revendications précédentes,
**caractérisée par** un actionnement commun des dispositifs de commutation (150, 151, 152) dans le conducteur d'entrée et/ou le conducteur de sortie de l'onduler (161, 162, 163, 164) à déconnecter.

30. Installation éolienne selon l'une des revendications 28 ou 29,
**caractérisée en ce que** les dispositifs de commutation (153, 166 ; 154, 167 ; 155, 168 ; 156, 169) ouvrent la totalité des connexions de l'onduleur (161, 162, 163, 164) à déconnecter.

31. Installation éolienne selon l'une des revendications précédentes,
**caractérisée par** au moins un transformateur (181, 182, 183, 184) associé à chaque stator (121, 122, 123, 124).

32. Installation éolienne selon l'une des revendications précédentes,
**caractérisée par** au moins un transformateur (181, 182, 183, 184) associé à chaque enroulement de stator (1211, 1212).

33. Installation éolienne selon l'une des revendications précédentes,
**caractérisée par** au moins un transformateur (181, 182, 183, 184) réalisé sous forme de transformateur triphasé.

34. Installation éolienne selon l'une des revendications précédentes,
**caractérisée en ce que** les transformateurs (181, 182, 183, 184) sont tous sans exception réalisés sous forme de transformateurs triphasés.

35. Installation éolienne selon l'une des revendications précédentes,
**caractérisée par** au moins un transformateur (181, 182, 183, 184) surdimensionné d'une valeur prescrite.

36. Installation éolienne selon l'une des revendications précédentes,
**caractérisée en ce que** la totalité des transformateurs (181, 182, 183, 184) sont surdimensionnés d'une valeur prescrite.

37. Installation éolienne selon l'une des revendications précédentes,
**caractérisée par** des liaisons entre eux des conducteurs d'entrée des transformateurs (181, 182, 183, 184) et/ou des liaisons entre eux des conducteurs de sortie des transformateurs (181, 182, 183, 184).

38. Installation éolienne selon l'une des revendications précédentes,
**caractérisée par** des dispositifs de commutation (173, 174, 175, 176, 186, 187, 188, 189) sur le côté primaire et sur le côté secondaire de chaque transformateur (181, 182, 183, 184).

39. Installation éolienne selon la revendication 38,
**caractérisée par** une actionnement commun du dispositif de commutation (173, 174, 175, 176) sur le côté primaire d'un transformateur (181, 182, 183, 184) à déconnecter, et du dispositif de commutation (186, 187, 188, 189) sur le côté secondaire du même transformateur (181, 182, 183, 184).

40. Installation éolienne selon la revendication 38,
**caractérisés en ce que** les dispositifs de commutation (173, 174, 175, 176, 186, 187, 188, 189) sont conçus de façon à déconnecter le côté primaire et le côté secondaire du transformateur (181, 182, 183, 184) avec toutes les connexions, sur le plan galvanique.

41. Installation éolienne selon l'une des revendications précédentes,
**caractérisée par** un dispositif de commande qui pilote les dispositifs de commutation (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) en fonction du composant défaillant ou endommagé.

42. Installation éolienne selon l'une des revendications précédentes,
**caractérisée par** une dispositif de commande qui pilote les dispositifs de commutation (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) en tenant compte de la puissance produite ou à commuter.

43. Installation éolienne selon l'une des revendications précédentes,
**caractérisée en ce que** les dispositif de commutation (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) sont au moins en partie des dispositifs de commutation électromécaniques.

44. Installation éolienne selon l'une des revendications précédentes,
**caractérisée en ce que** les dispositifs de commutation (130, 131, 132, 133, 134, 135, 136, 146, 147, 148, 149, 150, 151, 152, 153, 154, 155, 156, 166, 167, 168, 169, 170, 171, 172, 173, 174, 175, 176, 186, 187, 188, 189) sont au moins en partie des dispositifs de commutation électroniques.

45. Installation éolienne, notamment selon l'une des revendications précédentes, comprenant un agencement de générateur, constitué d'un rotor et d'au moins un stator qui n'entoure que partiellement la périphérie du rotor.

46. Installation éolienne selon la revendication 45, **caractérisée en ce que** l'agencement de générateur comprend n stators, qui au total entourent complètement le rotor, n étant un entier naturel > 1.

47. Installation éolienne selon l'une des revendications précédentes 45, 46,
**caractérisée en ce que** tous les stators sont portés par un anneau de stator commun.

48. Installation éolienne selon l'une des revendications 45 à 47,
**caractérisée en ce que** chaque stator individuel peut être rechange en conservant les autres stators.
